# EUROPEAN PATENT APPLICATION

(11) **EP 2 783 827 A1**
(43) Date of publication of application: **01.10.2014**
(21) Application number: 14160664.0
(22) Date of filing: 19.03.2014
(51) Int. Cl.: B29C 45/74, B29C 45/18

(54) **Injection molding machine**

(30) Priority: 25.03.2013 JP 2013063058; 04.12.2013 JP 2013251483
(71) Applicant: SUMITOMO HEAVY INDUSTRIES, LTD., Tokyo 141-6025 (JP)
(72) Inventor: Abe, Masahiro, Kanagawa 237-8555 (JP)
(74) Representative: HOFFMANN EITLE

(57) **Abstract**

An injection molding machine includes a cylinder (41) that heats a molding material to be filled into a mold unit, a cooling block (44) that cools a molding material supply port (41a) of the cylinder (41), and a cooling gas supply part (45) that blows cooling gas for cooling the cooling block (44). A blow direction of the cooling gas that is blown from the cooling gas supply part (45) is perpendicular or diagonal with respect to a flow direction of the cooling gas that flows along the cooling block (44).

## Description

### BACKGROUND

### 1. Technical Field

The present invention relates to an injection molding machine.

### 2. Description of Related Art

Injection molding machines include a cylinder that heats molding material to be filled into a mold unit and a cooling block that cools a molding material supply port of the cylinder (See, e.g., Japanese Unexamined Patent Publication No. 2005-103875). The cooling block has a flow path for a cooling liquid (e.g., cooling water) formed therein, and the temperature of the molding material supply port of the cylinder is maintained at a temperature that would not cause the molding material (e.g., resin pellets) to melt. In this way, clogging of the molding material supply port may be prevented.

Conventionally, a relatively large amount of cooling liquid has to be flown within the cooling block.

Accordingly, there is a demand for an injection molding machine that is capable of reducing the amount of cooling liquid used.

### SUMMARY

According to one embodiment of the present invention, an injection molding machine includes a cylinder that heats a molding material to be filled into a mold unit, a cooling block that cools a molding material supply port of the cylinder, and a cooling gas supply part that blows cooling gas for cooling the cooling block. A blow direction of the cooling gas from the cooling gas supply part is perpendicular or diagonal with respect to a flow direction of the cooling gas that flows along the cooling block.

According to an aspect of the present invention, an injection molding machine that is capable of reducing the amount of cooling liquid used may be provided.

### BRIEF DESCRIPTION OF THE DRAWINGS

FIG. 1 is a cross-sectional view of an injection unit of an injection molding machine according to an embodiment of the present invention;
FIG. 2 is a side view of a relevant part of the injection unit illustrated in FIG. 1;
FIG. 3 is a side view illustrating an modified example of a windshield;
FIG. 4 is a longitudinal cross-sectional view of a cooling gas flow path according to a first modified example;
FIG. 5 is a lateral cross-sectional view of the cooling gas flow path according to the first modified example;
FIG. 6 illustrates a cooling gas flow path according to a second modified example;
FIG. 7 is a lateral cross-sectional view of the cooling gas flow path according to the second modified example;
FIG. 8 illustrates a cooling gas flow path according to a third modified example;
FIG. 9 illustrates a cooling gas flow path according to a fourth modified example;
FIG. 10 is a top view of a variable mechanism of an injection molding machine according to another embodiment of the present invention;
FIG. 11 is a top view illustrating a heat discharge part rotated from the disposition illustrated in FIG. 10;
FIG. 12 is a top view illustrating the heat discharge part tilting from the disposition illustrated in FIG. 11; and
FIG. 13 is a top view illustrating the heat discharge part moved linearly from the disposition illustrated in FIG. 12.

### DETAILED DESCRIPTION

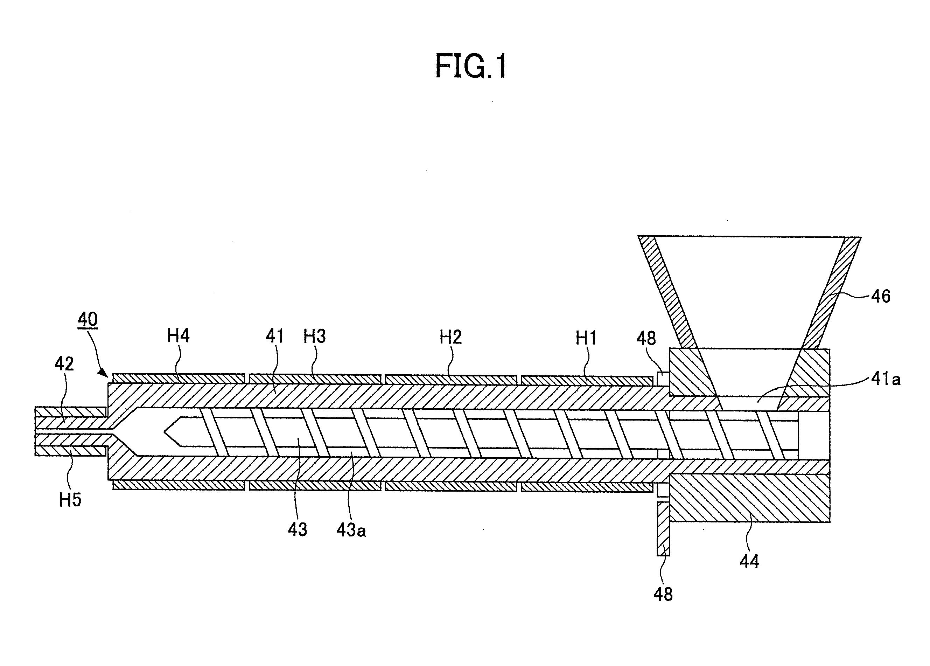

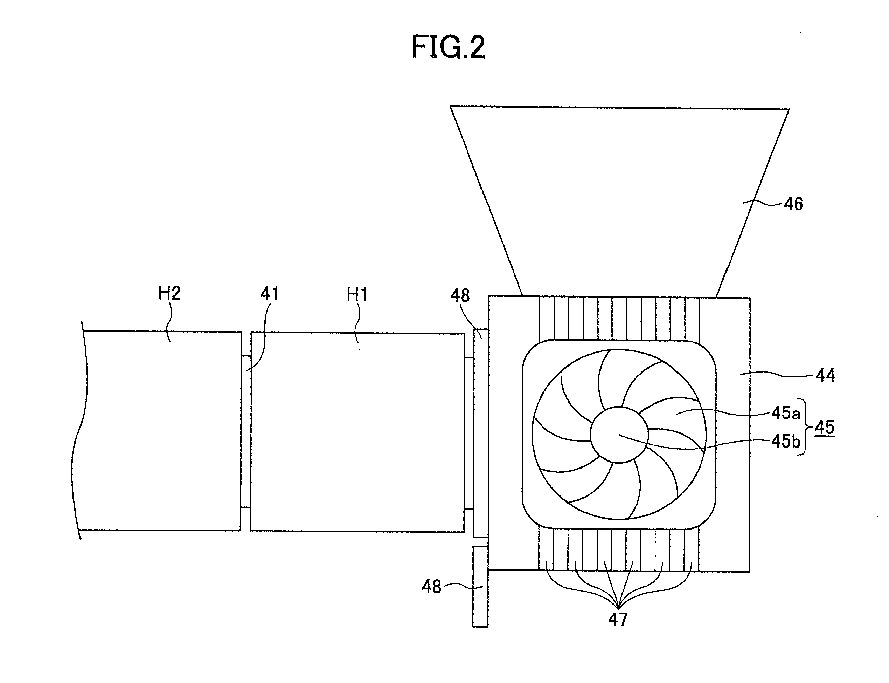

In the following, embodiments of the present invention are described with reference to the accompanying drawings. Note that identical or corresponding features shown in two or more of the drawings are given the same reference numerals and their descriptions may be omitted. Also, in the following descriptions, it is assumed that the moving direction of a screw during a filling process (direction to the left in FIGS. 1 and 2) corresponds to a forward (front) direction, and the moving direction of the screw during a plasticizing process (direction to the right in FIGS. 1 and 2) corresponds a backward (rear) direction.

FIG. 1 illustrates an injection molding machine according to an embodiment of the present invention. FIG. 2 is a side view of a relevant part of the injection molding machine illustrated in FIG. 1.

The injection molding machine illustrated in FIGS. 1 and 2 includes an injection unit 40 that fills molding material into a mold unit. The injection unit 40 includes a cylinder 41, a screw 43, a cooling block 44, a cooling fan 45 as a cooling gas supply part, and a hopper 46 as a molding material supply part, for example.

The cylinder 41 heats molding material using heat from heat sources H1-H3 such as heaters arranged at the outer periphery of the cylinder 41. The cylinder 41 also has a molding material supply port 41a formed at its rear side. Molding material is supplied to the cylinder 41 from the hopper 46 via the molding material supply port 41a.

Note that in the present embodiment, the hopper 46 is used as the molding material supply part; however, in other embodiments, a feed screw that is capable of controlling the molding material supply rate may be used, for example.

The screw 43 is arranged to be rotatable and movable back and forth within the cylinder 41. In a plasticizing process, the screw 43 is rotated, and molding material supplied to the cylinder 41 is conveyed forward along a spiral groove 43a formed on the screw 43 and is gradually melted. As the molten molding material is conveyed forward and accumulated at a front part of the cylinder 41, the screw 43 recedes backward. When a predetermined amount of molding material is accumulated at the front part of the screw 43, rotation of the screw 43 is stopped, and the plasticizing process is completed. Then, in a filling process, the screw 43 is moved forward, and the molding material accumulated at the front part of the cylinder 41 is ejected from a nozzle 42 arranged at the front end of the cylinder 41 and is filled into the mold unit. The nozzle 42 may have a heat source H5 such as a heater arranged at its periphery, for example.

The spiral groove 43a formed on the screw 43 may have a groove depth that is constant or a groove depth that varies depending on the position of the spiral groove 43a.

The cooling block 44 includes an insertion hole into which a rear part of the cylinder 41 is inserted. The cooling block 44 is configured to cool the molding material supply port 41a formed at the rear part of the cylinder 41. The temperature of the molding material supply port 41a is maintained at a temperature that would not cause melting of the molding material (e.g., resin pellets). In this way, clogging of the molding material supply port 41a may be prevented.

The cooling fan 45 blows cooling gas for cooling the cooling block 44. By blowing cooling gas from the cooling fan 45 onto the cooling block 44, the flow direction of the cooling gas may be changed. The cooling gas from the cooling fan 45 flows along the surface of the cooling block 44 and draws heat from the cooling block 44. Note that although the type of cooling gas used is not particularly limited, air may be used, for example.

The blow direction of the cooling gas from the cooling fan 45 (perpendicular direction with respect to the planar face of FIG. 2) may be perpendicular to the flow direction of the cooling gas flowing along the surface of the cooling block 44 (vertical direction in FIG. 2). By increasing the diameter of a blow outlet of the cooling fan 45, the supply rate of cooling gas supplied from the cooling fan 45 to the cooling block 44 may be increased, and cooling efficiency for cooling the cooling block 44 may be improved. In this way, in some embodiments, the amount of cooling liquid flown within the cooling block 44 may be reduced to substantially zero, for example.

Note that in the present embodiment, the blow direction of the cooling gas from the cooling fan 45 is arranged to be perpendicular to the flow direction of the cooling gas flowing along the surface of the cooling block 44; however, the blow direction does not necessarily have to be perpendicular and may be diagonal (i.e., in a non-parallel direction) with respect to the flow direction of the cooling gas. Even in the case where the blow direction is diagonal with respect to the flow direction, the supply rate of the cooling gas may be increased by increasing the diameter of the blow outlet of the cooling fan 45.

The cooling fan 45 includes multiple fan blades 45a and a rotation axis 45b that rotates along with the fan blades 45a, for example. The cooling fan 45 may be configured to draw in cooling gas from an axial direction of the rotation axis 45b and blow out the cooling gas in the axial direction of the rotation axis 45b, for example. In this way, the thickness of the cooling fan 45 may be reduced and the injection molding machine 40 may be prevented from being enlarged.

Note that other various types of fans may be used as the cooling fan 45 including fans that draw in and blow out cooling gas in different directions such as a sirocco fan, for example.

The cooling fan 45 may be arranged at the left and right sides of the cooling block 44, for example. In this way, the cooling block 44 may be cooled from the left side and the right side and cooling efficiency for cooling the cooling block 44 may be improved, for example. Note that in some embodiments three or more cooling fans 45 may be provided. For example, the cooling fan 45 may be arranged at the left and right sides as well as the bottom side of the cooling block 44. In other embodiments, only one cooling fan 45 may be provided.

Cooling gas flow paths 47 for the cooling gas may be formed at the cooling block 44. The cooling gas flow paths 47 may be grooves formed on the surface of the cooling block 44, for example. Walls forming the cooling gas flow paths 47 may act as fins. In this way, the cooling gas may flow along the gas flow paths 47 and the flow of cooling gas may be stabilized.

The groove depth and the groove width of the cooling gas flow paths 47 may be arranged to be constant from one end to the other end of the cooling gas flow paths 47, and the cross-sectional areas of the cooling gas flow paths 47 may be arranged to be constant, for example. Note that in the present descriptions, the cross-sectional area of the cooling gas flow path 47 refers to the area of a cross-section perpendicular to the flow direction of the cooling gas flow path 47.

When raising the temperature of the cylinder 41 such as during startup or injection molding operations, a part of the cylinder 41 (portion at the front side of the cooling block 44) is heated. The flow direction of cooling gas that flows along the cooling gas flow paths 47 during startup or injection molding operations may be perpendicular to an axial line of the cylinder 41. In this way, cooling gas may be prevented from flowing toward the front side of the cooling block 44 (toward the heat sources H1-H5). Thus, the heat sources H1-H5 may be prevented from being cooled by the cooling gas and their heating efficiency may remain substantially unaffected by the cooling gas.

Note that the flow direction of the cooling gas flowing along the cooling gas flow paths 47 during startup or injection molding operations may alternatively be arranged parallel to the axial line of the cylinder 41. In this case, the cooling gas may be arranged to flow toward the rear side of the cooling block 44.

One or more windshield parts 48 that block the flow of cooling gas flowing toward the front side of the cooling block 44 may be arranged at the cooling block 44. The windshield parts 48 may be arranged at the front face of the cooling block 44. For example, a number (e.g., three) of windshield parts 48 may be arranged to protrude from the left and right sides and bottom side of the cooling block 44 to block the flow of cooling gas from the cooling block 44 toward the heat sources H1-H5.

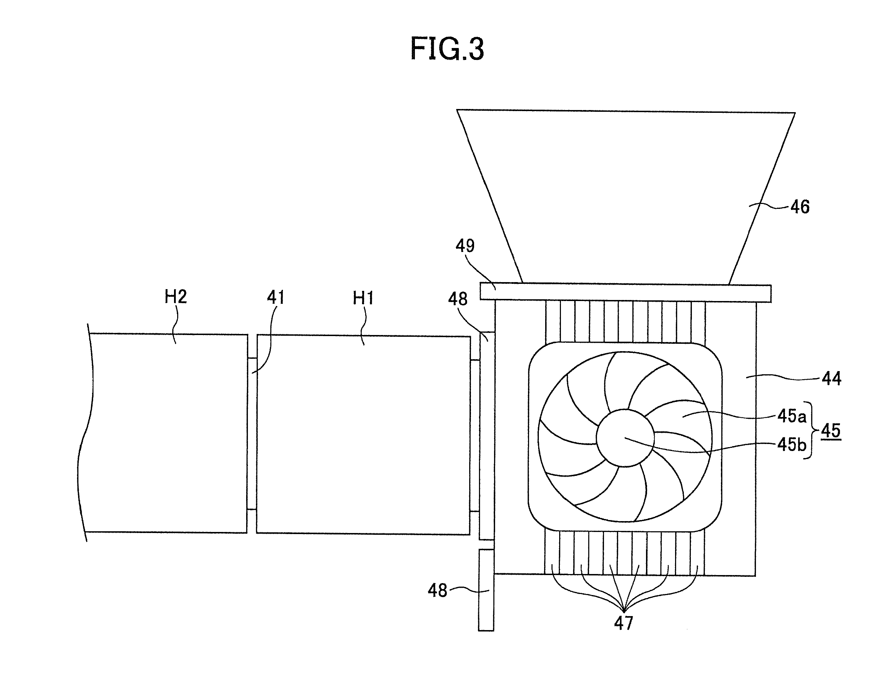

FIG. 3 is a side view illustrating a modified example of the windshield part. In the example illustrated in FIG. 3, a windshield part 49 that blocks the flow of cooling gas flowing upward from the cooling block 44 is arranged at the cooling block 44. The windshield part 49 may be arranged at the top face of the cooling block 44 to protrude outward from the left and right sides of the cooling block 44, for example. In this way, equipment arranged at the upper side of the cooling block 44 such as a molding material dryer may be protected from influences of the cooling gas, for example.

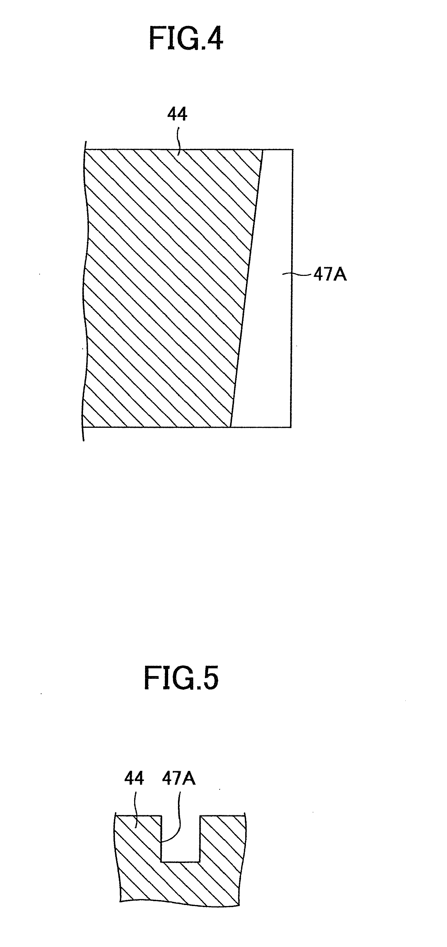

FIG. 4 is a longitudinal cross-sectional view of a cooling gas flow path according to a first modified example. FIG. 5 is a lateral cross-sectional view of the cooling gas flow path according to the first modified example.

As illustrated in FIG. 5, the cooling gas flow path 47A of the first modified example has a rectangular cross-sectional shape. As illustrated in FIG. 4, the groove depth of the cooling gas flow path 47A is arranged to become gradually deeper from the upper end portion to the lower end portion of the cooling gas flow path 47A. The groove width of the cooling gas flow path 47A may be constant. Thus, the cross-sectional area of the cooling gas flow path 47A becomes gradually larger from the upper end portion to the lower end portion of the cooling gas flow path 47A. The greater the cross-sectional area of the cooling gas flow path 47A, the smaller the flow resistance of the cooling gas. Thus, the cooling gas is more likely to flow in the direction toward a portion of the cooling gas flow path 47A with a greater cross-sectional area. Accordingly, a downstream flow of the cooling gas dominates over an upstream flow of the cooling gas within the cooling gas flow path 47A. As a result, equipment arranged at the upper side of the cooling block 44 may be protected from influences of the cooling gas, for example.

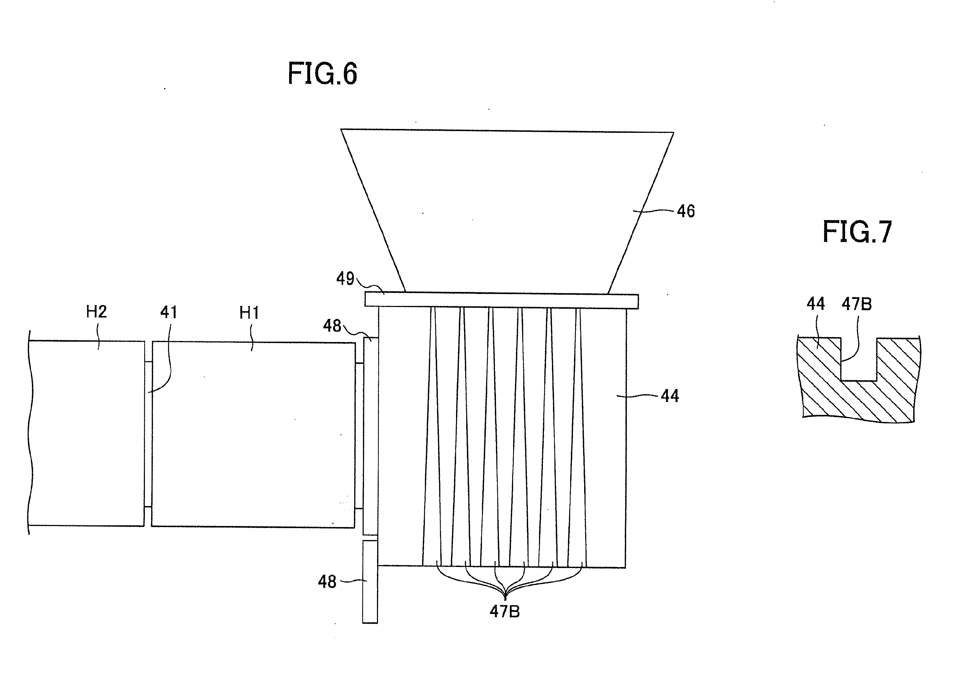

FIG. 6 illustrates cooling gas flow paths 47B according to a second modified example. Note that in FIG. 6, an illustration of the cooling fan 45 is omitted. FIG. 7 is a lateral cross-sectional view of the cooling gas flow path 47B according to the second modified example.

As illustrated in FIG. 7, the cooling gas flow path 47B has a rectangular cross-sectional shape. As illustrated in FIG. 6, the groove width of the cooling gas flow path 47B becomes gradually wider from the upper end portion to lower end portion of the cooling gas flow path 47B. The groove depth of the cooling gas flow path 47B may be constant. Thus, the cross-sectional area of the cooling gas flow path 47B becomes gradually larger from the upper end portion to the lower end portion of the cooling gas flow path 47B. Accordingly, a downstream flow of the cooling gas may dominate over an upstream flow of the cooling gas within the cooling gas flow path 47B. As a result, equipment arranged at the upper side of the cooling block 44 may be protected from influences of the cooling gas, for example.

Note that the cross-sectional shape of the cooling gas flow path is not limited to being rectangular as in the examples illustrated in FIGS. 5 and 7. In other examples, the cross-sectional shape of the cooling gas flow path may be triangular or trapezoidal. Also, in some embodiments, both the groove depth and the groove width of the cooling gas flow path may change from the upper end portion to the lower end portion of the cooling gas flow path. Further, the cross-sectional area of the cooling gas flow path does not necessarily have to change continuously but may instead change intermittently.

In the case where the cross-sectional area of the cooling gas flow path changes, the cross-sectional area does not necessarily have to change throughout the entire length of the cooling gas flow path from one end to the other end as long as the change occurs at some portion of the cooling gas flow path. For example, the cross-sectional area of the cooling gas flow path from a center portion to a lower end portion of the cooling gas flow path may be arranged to change so that cooling gas from the cooling fan that is blown onto the center portion of the cooling block may easily flow downstream. In another example, the cross-sectional area of the cooling gas flow path from a center portion to an upper end portion of the cooling gas flow path may be arranged to change so that cooling gas from the cooling fan that is blown onto the center portion of the cooling block may be prevented from flowing upstream.

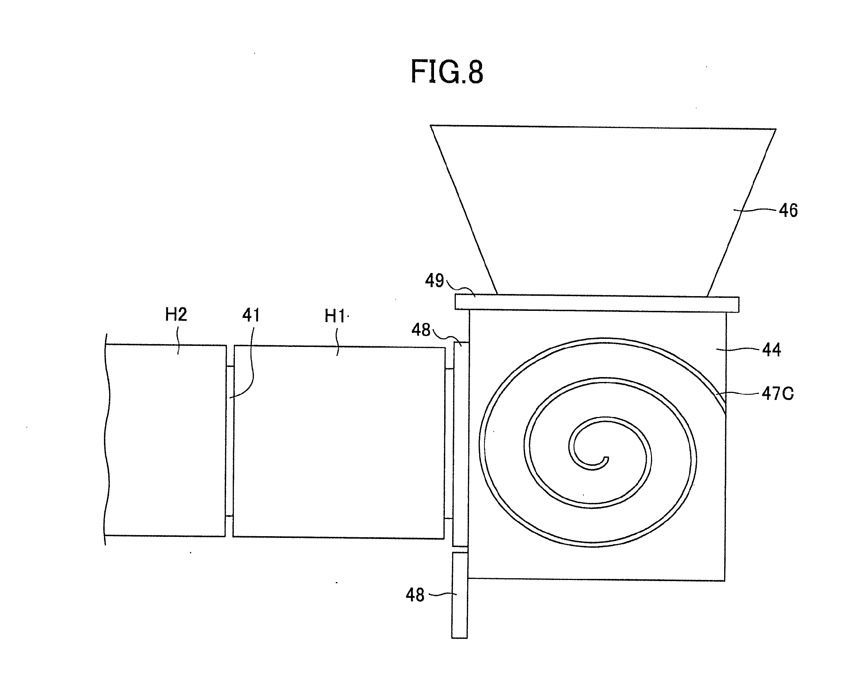

Note that the direction in which the cross-sectional area of the cooling gas flow path grows larger is not limited to a downward direction but may be adjusted according to directions for decreasing or increasing influences of the cooling gas. Also, the cross-sectional area of the cooling gas flow path does not necessarily have to continuously grow larger from one end to the other end of the cooling gas flow path. For example, the groove depth of the cooling gas flow path may be increased and decreased from one end to the other end of the cooling gas flow path in order to increase the heat discharge area of the cooling block. The above aspects also apply to the cooling gas flow paths illustrated in FIGS. 8-13 described below.

FIG. 8 illustrates a cooling gas flow path 47C according to a third modified example. Note that in FIG. 8, an illustration of the cooling fan 45 is omitted.

The cooling gas flow path 47C is arranged into a spiral pattern on the surface of the cooling block 44. The spiral pattern is a curved line drawn from a center point steadily getting farther away from the center point. In this way, cooling gas may flow spirally along the cooling gas flow path 47C.

The cross-sectional area of the cooling gas flow path 47C may become larger on a continuous basis or an intermittent basis from an inner end portion to an outer end portion of the cooling gas flow path 47C. In this way, a flow of cooling gas from the inner end portion to the outer end portion of the cooling gas flow path 47C may be dominant within the cooling gas flow path 47C.

Note that even in a case where the cross-sectional area of the cooling gas flow path 47C is constant, cooling gas may still flow spirally along the cooling gas flow path 47C.

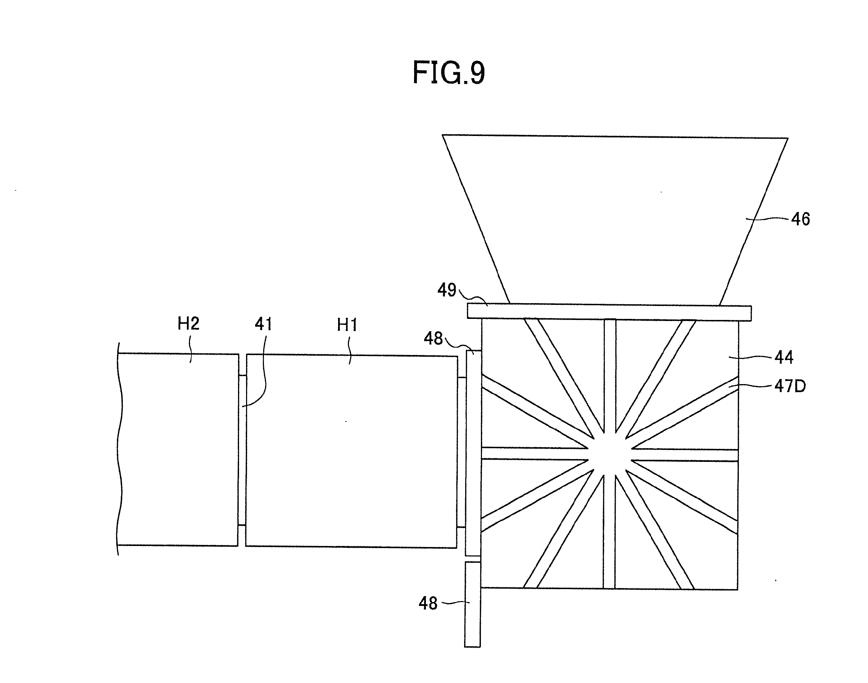

FIG. 9 illustrates a cooling gas flow path 47D according to a fourth modified example. Note that in FIG. 9, an illustration of the cooling fan 45 is omitted.

The cooling gas flow path 47D illustrated in FIG. 9 is arranged into a radial pattern on the surface of the cooling block 44. That is, straight lines extend radially in various directions from a center point. The straight lines extending radially may be connected to each other as illustrated in FIG. 9, but they do not necessarily have to be connected. In this way, cooling gas may flow radially along the cooling gas flow path 47D.

The cross-sectional area of the cooling gas flow path 47D may become larger on a continuous basis or an intermittent basis from an inner end portion to an outer end portion of the cooling gas flow path 47D. In this way, a flow of cooling gas from the inner end portion to the outer end portion of the cooling gas flow path 47D may be dominant within the cooling gas flow path 47D.

Note that even in a case where the cross-sectional area of the cooling gas flow path 47D is constant, cooling gas may still flow radially along the cooling gas flow path 47D.

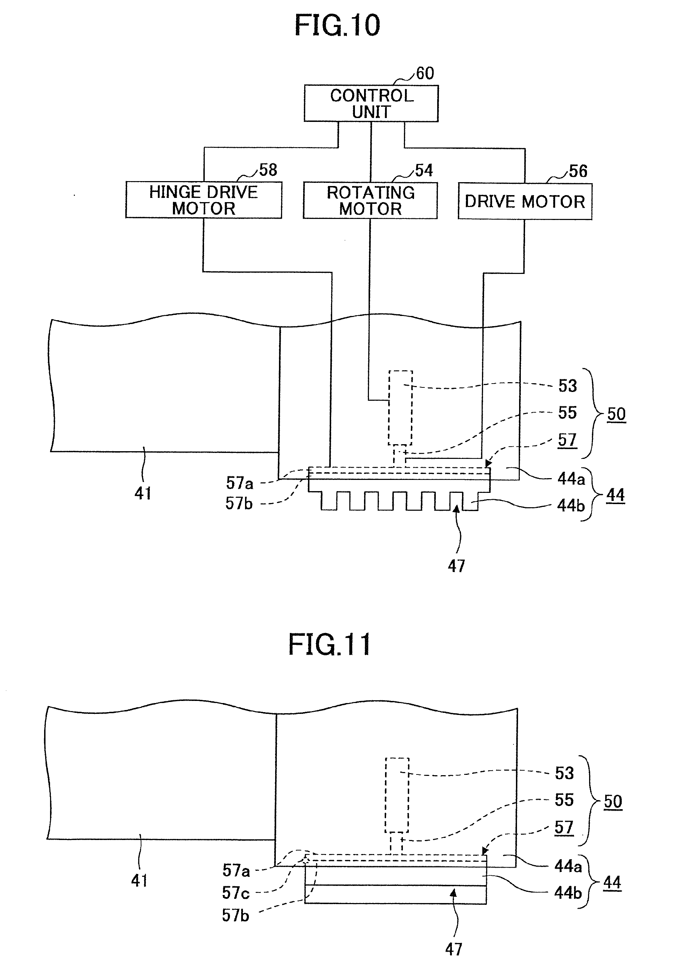

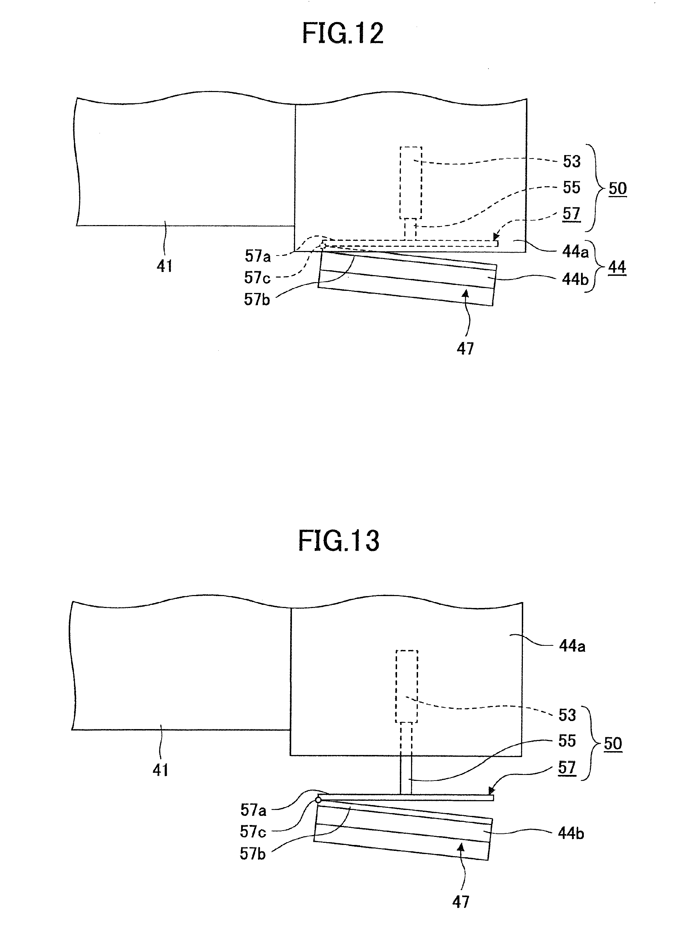

FIG. 10 is a top view of a variable mechanism 50 of an injection molding machine according to another embodiment of the present invention. In FIG. 10, a drive unit that drives the variable mechanism 50 and a control unit 60 that controls the drive unit are illustrated in addition to the variable mechanism 50. FIG. 11 is a top view illustrating a heat discharge part 44b rotated from the disposition illustrated in FIG. 10. FIG. 12 is a top view of the heat discharge part 44b tilted from the disposition illustrated in FIG. 11. FIG. 13 is a top view of the heat discharge part moved linearly from the disposition illustrated in FIG. 12. Note that in FIGS. 10-13, illustrations of the heat sources H1-H5 for heating the cylinder 41 and the cooling fan 45 are omitted.

In the present embodiment, the cooling block 44 includes a cooling block body 44a and a heat discharge part 44b. The cooling block body 44a has an insertion hole into which a rear part of the cylinder 41 is inserted. The cooling block body 44a is configured to cool the molding material supply port 41a formed at the rear part of the cylinder 41. Cooling gas flow paths 47 in the form of grooves are formed on the surface of the heat discharge part 44b. The cooling gas flow paths 47 are formed in between fins of the heat discharge part 44b.

The cooling gas flow path 47 formed at the heat discharge part 44b is arranged to be linear, and the groove depth and groove width of the cooling gas flow path 47 are arranged to be constant from one end to the other end of the cooling gas flow path 47. Note that the cooling gas flow path formed at the heat discharge part 44b may be in various configurations such as the cooling gas flow path 47A illustrated in FIGS. 4 and 5, the cooling gas flow path 47B illustrated in FIGS. 6 and 7, the cooling gas flow path 47C illustrated in FIG. 8, or the cooling gas flow path 47D illustrated in FIG. 9.

The cooling fan 45 as illustrated in FIG. 2 is fixed to the heat discharge part 44b. Note that the disposition of the cooling fan 45 with respect to the heat discharge part 44b may be variable. For example, the disposition of the cooling fan 45 with respect to the heat discharge part 44b may be adjusted according to the disposition of the heat discharge part 44b with respect to the cooling block body 44a.

The injection molding machine of the present embodiment includes the variable mechanism 50 for enabling adjustment of the disposition of the heat discharge part 44b with respect to the cooling block body 44a. Note that "disposition" refers to at least one of an orientation and a distance. By enabling adjustment of the disposition of the heat discharge part 44b with respect to the cooling fan 45, the flow of cooling gas may be adjusted. The variable mechanism 50 may include a rotation shaft 53, a drive shaft 55, and a hinge 57, for example.

The rotation shaft 53 is rotatably mounted to the cooling block body 44a. The cooling block body 44a may include a bearing that supports the rotation shaft 53.

The drive shaft 55 rotates along with the rotation shaft 53. The drive shaft 55 is splined to the rotation shaft 53 and is movable in the axial direction of the drive shaft 55. The rotation shaft 53 and the drive shaft 55 form an expandable rod that may be expanded and contracted.

The hinge 57 includes a first mount part 57a and a second mount part 57b. The drive shaft 55 is fixed to the first mount part 57a, and the heat discharge part 44b is fixed to the second mount part 57b. The second mount part 57b is arranged to be rotatable with respect to the first mount part 57a around a rotation axis 57c.

In the variable mechanism 50 as described above, the heat discharge part 44b is arranged to be rotatable with respect to the cooling block body 44a around the rotation shaft 53. In this way, the orientation of the cooling gas flow path 47 with respect to the cooling block body 44a may be variable.

The heat discharge part 44b may rotate with respect to the cooling block body 44a such that the orientation of the cooling gas flow path 47 changes between a direction parallel to the longitudinal direction (e.g., state as illustrated in FIG. 10) and a direction parallel to the lateral direction (e.g., state as illustrated in FIG. 11). Note that "rotation" may be less than one full rotation or greater than or equal to one full rotation. Also, the rotating direction may be reversed in some examples, while the rotating direction may not be reversed in other examples.

During startup or injection molding operations, a part of the cylinder 41 (portion at the front side of the cooling block 44) is heated. At this point, the heat discharge part 44b may be in the state as illustrated in FIG. 10. In this way, an upstream flow and a downstream flow of cooling gas may be created along the cooling gas flow path 47. That is, cooling gas may be prevented from flowing toward the front side, and heating efficiency of the cylinder 41 may be improved.

Note that the cross-sectional area of the cooling gas flow path 47 may be arranged to grow larger on a continuous basis or an intermittent basis from the upper end portion to the lower end portion of the cooling gas flow path 47 so that a downstream flow dominates over an upstream flow within the cooling gas flow path 47 during startup or injection molding operations. In this way, equipment arranged at the upper side of the cooling block 44 may be protected from influences of the cooling gas.

On the other hand, when the temperature of the cylinder 41 is lowered such as during shutdown, the heat discharge part 44b may be in the state as illustrated in FIG. 11 in order to improve cooling efficiency of the cylinder 41. In this case, a forward flow of cooling gas and a backward flow of cooling gas may be created along the cooling gas flow path 47. Thus, the cylinder 41 may be efficiently cooled by the cooling gas flowing in the forward direction.

Note that the cross-sectional area of the cooling gas flow path 47 may be arranged to grow larger on a continuous basis or an intermittent basis from the rear end portion to the front end portion of the cooling gas flow path 47 so that the forward flow dominates over the backward flow of cooling gas within the cooling gas flow path 47 during shutdown. In this way, the cylinder 41 may be cooled even more efficiently.

Also, in the variable mechanism 50 described above, the heat discharge part 44b is rotatable around the rotation axis 57c of the hinge 57. In this way, the orientation of the heat discharge part 44b with respect to the cooling block body 44a may be variable.

The heat discharge part 44b may rotate around the rotation axis 57c between a disposition parallel to the cooling block body 44a (e.g., state as illustrated in FIG. 11) and a disposition diagonal with respect to the cooling block body 44a (e.g., state as illustrated in FIG. 12). Note that the heat discharge part 44b may also be in a disposition perpendicular to the cooling block body 44a.

Note that during shutdown, the heat discharge part 44b may be in the state as illustrated in FIG. 11 rather than the state as illustrated in FIG. 12. In this case, a flow of cooling gas is created within the cooling gas flow path 47 in which the cooling gas comes closer to the cylinder 41 as the cooling gas flows forward. Accordingly, the cooling gas may be easily blown onto the cylinder 41.

On the other hand, during startup or injection molding operations, the heat discharge part 44b may be in the state as illustrated in FIG. 10 so that the heat discharge part 44b may easily receive heat from the cooling block body 44a.

Note that the heat discharge part 44b of the present embodiment is arranged to be rotatable in one direction around the rotation axis 57c from a disposition parallel to the cooling block body 44a (e.g., state as illustrated in FIG. 11); however, in other embodiments, the heat discharge part 44b may be rotatable in two directions from the position parallel to the cooling block body 44a. In this case, the heat discharge part 44b may tilt in both directions from the position parallel to the cooling block body 44a. Also, in this case, the rotation axis 57c may be positioned around the center of the heat discharge part 44b, for example.

Further, in the variable mechanism 50 described above, the heat discharge part 44b may be movable linearly with respect to the cooling block body 44a. In this way, the distance between the cooling block body 44a and the heat discharge part 44b may be variable.

The heat discharge part 44b is moved toward the cooling block body 44a (e.g., state as illustrated in FIG. 12) and away from the cooling block body 44a (e.g., state as illustrated in FIG. 13) by the expansion and contraction of the expandable rod formed by the rotation shaft 53 and the drive shaft 55.

During shutdown, the heat discharge part 44b may be in the state as illustrated in FIG. 13 rather than the state as illustrated in FIG. 12. In this case, the forward flow of cooling gas may be prevented from being blocked by components surrounding the cooling block body 44a. Thus, the cylinder 41 may be even more efficiently cooled.

Also, by changing the distance between the cooling block body 44a and the heat discharge part 44b during shutdown, a location on the cylinder 41 onto which the cooling gas is blown may be changed. The location on the cylinder 41 may be constantly changing, or the location may be switched back and forth, for example. Note that the orientation of the heat discharge part 44b with respect to the cooling block body 44a may also be changed in order to change the location onto which the cooling gas is blown.

On the other hand, during startup or injection molding operations, the heat discharge part 44b may be in the state as illustrated in FIG. 10 so that the heat discharge part 44b may easily receive heat from the cooling block body 44a.

The variable mechanism 50 may be driven by a drive unit such as a motor. As illustrated in FIG. 10, the drive unit for driving the variable mechanism 50 may include a rotating motor 54, a drive motor 56, and a hinge drive motor 58, for example.

When the rotating motor 54 is driven, the drive shaft 53 is rotated. When the drive shaft 53 is rotated, the drive shaft 55 and the hinge 57 are rotated, and the orientation of the rotation axis 57c of the hinge 57 is changed.

When the drive motor 56 is driven, a rotating motion of the drive motor 56 is converted into a linear motion in a ball screw mechanism, and the drive shaft 55 and the hinge 57 are moved linearly. As a result, the cooling fan 45 is moved linearly with respect to the cooling block 44.

When the hinge drive motor 58 is driven, the second mount part 57b rotates with respect to the first mount part 57a, and the orientation of the cooling fan 45 with respect to the cooling block 44 is changed.

The control unit 60 controls the drive unit including the rotating motor 54, the drive motor 56, and the hinge drive motor 58, for example. The control unit 60 includes a CPU and a storage part such as a memory. The control unit 60 controls the drive unit of the variable mechanism 50 by having the CPU execute a program stored in the storage part.

In one embodiment, the control unit 60 may monitor the temperature of the cooling block 44 with a temperature sensor, and control the drive unit of the variable mechanism 50 based on the monitoring result. For example, the control unit 60 may control the drive unit of the variable mechanism 50 such that the temperature of the cooling block 44 may be adjusted to a preset temperature.

In another embodiment, the control unit 60 may monitor the temperature of the cylinder 41 with a temperature sensor, and control the drive unit of the variable mechanism 50 based on the monitoring result. For example, the control unit 60 may control the drive unit of the variable mechanism 50 such that the temperature of the cylinder 41 may be adjusted to a preset temperature.

In yet another embodiment, the control unit 60 may control the drive unit of the variable mechanism 50 based on the monitoring results of both the temperature of the cooling block 44 and the temperature of the cylinder 41.

Note that the variable mechanism 50 may have various components and configurations. For example, the rotation shaft 53, the drive shaft 55, and the hinge 57 may be implemented individually or in any given combination. Also, a link mechanism may be used instead of the hinge 57, for example. A hydraulic cylinder may be used as the drive unit of the variable mechanism 50, for example. Further, the variable mechanism 50 may be driven manually, for example.

Although the present invention has been described above in connection with certain illustrative embodiments, the present invention is not limited to these embodiments, and numerous variations and modifications may be made without departing from the scope of the present invention.

For example, although the injection unit illustrated above corresponds to an in-line screw type injection unit, the present invention may also be applied to a pre-plasticizing type injection unit, for example. The pre-plasticizing type injection unit supplies molding material that is melted at a plasticizing cylinder to an injection cylinder and injects the molten molding material from the injection cylinder into a mold unit. In a screw pre-plasticizing type injection unit, a screw is arranged within the plasticizing cylinder. In a plunger pre-plasticizing type injection unit, a plunger is arranged within the plasticizing cylinder. In the pre-plasticizing type injection unit, the cooling block may be configured to cool the plasticizing cylinder, for example.

## Claims

1. An injection molding machine comprising:
a cylinder (41) that heats a molding material to be filled into a mold unit;
a cooling block (44) that cools a molding material supply port (41a) of the cylinder (41); and
a cooling gas supply part (45) that blows cooling gas for cooling the cooling block (44);
wherein a blow direction of the cooling gas that is blown from the cooling gas supply part (45) is perpendicular or diagonal with respect to a flow direction of the cooling gas that flows along the cooling block (44).

2. The injection molding machine as claimed in claim 1, wherein the cooling block (44) includes a cooling gas flow path (47, 47A, 47B, 47C, 47D) for the cooling gas.

3. The injection molding machine as claimed in claim 2, wherein
the cooling block (44) includes a cooling block body (44a) including an insertion hole into which the cylinder (41) is inserted, and a heat discharge part (44b) where the cooling gas flow path (47, 47A, 47B, 47C, 47D) is formed; and
a disposition of the heat discharge part (44b) with respect to the cooling block body (44a) is arranged to be variable.

4. The injection molding machine as claimed in claim 3, wherein an orientation of the heat discharge part (44b) with respect to the cooling block body (44a) is arranged to be variable.

5. The injection molding machine as claimed in claim 3 or 4, wherein a distance between the heat discharge part (44b) and the cooling block body (44a) is arranged to be variable.
